(19) Europäisches Patentamt
European Patent Office
Office européen des brevets

(11) **EP 4 722 277 A1**

(12) **EUROPEAN PATENT APPLICATION**
published in accordance with Art. 153(4) EPC

(43) Date of publication:
08.04.2026 Bulletin 2026/15

(21) Application number: 24815583.0

(22) Date of filing: 30.05.2024

(51) International Patent Classification (IPC):
*C08J 5/00* (2006.01)    *C08L 27/18* (2006.01)

(52) Cooperative Patent Classification (CPC):
C08J 5/00; C08L 27/18

(86) International application number:
PCT/JP2024/019919

(87) International publication number:
WO 2024/248103 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.06.2023 JP 2023091849

(71) Applicant: AGC INC.
Chiyoda-ku,
Tokyo 1008405 (JP)

(72) Inventors:
• MATSUMOTO, Mariko
Tokyo 100-8405 (JP)
• ABE, Kaori
Tokyo 100-8405 (JP)
• OTSUGU, Satoshi
Tokyo 100-8405 (JP)
• TAGUCHI, Daisuke
Tokyo 100-8405 (JP)

(74) Representative: Müller-Boré & Partner
Patentanwälte PartG mbB
Friedenheimer Brücke 21
80639 München (DE)

(54) **FLUOROCARBON RESIN MOLDED BODY**

(57) A molded body obtained by compression-molding and sintering a fluororesin composition comprising: a first fluororesin having a thermal history of having been heated to a melting point or higher; and a second fluororesin having no thermal history of having been heated to a melting point or higher, wherein the first fluororesin is a non-melt-formable fluororesin, the second fluororesin is a non-melt-formable fluororesin produced by emulsion polymerization, an amount of the first fluororesin with respect to a total mass of the first fluororesin and the second fluororesin is 40% by mass or more, and a gloss of the molded body at an incident angle of 60° is 15% or more.

**Description**

TECHNICAL FIELD

The present invention relates to a fluororesin molded body.

Priority is claimed on Japanese Patent Application No. 2023-091849, filed June 2, 2023, the content of which is incorporated herein by reference.

BACKGROUND ART

A polytetrafluoroethylene resin (molding powder) obtained by suspension polymerization of tetrafluoroethylene (TFE) is molded by compression molding and then sintered to obtain a molded body. The molded body obtained by sintering is processed into a molded product having a desired shape by cutting processing or the like.

However, the polytetrafluoroethylene resin that has been sintered once (i.e., sintered PTFE), such as cutting chips generated during processing, is hard, and even compression after crushing cannot integrate its pieces, making the molding impossible. Therefore, to the reuse of sintered PTFE was difficult.

Patent Document 1 discloses that, in a case of a molded body obtained by sintering a compression-molded product of a mixture of a powder of sintered PTFE and a PTFE dispersion (a dispersion liquid of unsintered PTFE) obtained by emulsion polymerization of TFE, a porosity after the sintering decreases and a tensile strength after the sintering increases as a mixing proportion of the unsintered PTFE increases. For example, an example is disclosed in which the porosity after the sintering is 0% in a case where the mixing proportion of the unsintered PTFE is 100%.

Citation List

Patent Document

Patent Document 1: Japanese Patent No. 6612001

SUMMARY OF THE INVENTION

Technical Problem

Depending on the application, fluororesin molded bodies are required to have high compressive strength and compressive creep resistance.

However, according to the findings of the present inventors, even if the porosity after sintering is low, as in the examples of Patent Document 1, voids can still occur in compression tests. If many voids occur, the compressive strength and compressive creep resistance become insufficient.

The present invention has been made in view of the above circumstances, and the object of the present invention is to provide a fluororesin molded body that uses a fluororesin with a thermal history of having been heated to its melting point or higher, and that has good compressive strength and compressive creep resistance.

Solution to Problem

The embodiments of the present invention are as follows.

[1] A molded body obtained by compression-molding and sintering a fluororesin composition comprising:

a first fluororesin having a thermal history of having been heated to a melting point or higher; and
a second fluororesin having no thermal history of having been heated to a melting point or higher,
wherein the first fluororesin is a non-melt-formable fluororesin,
the second fluororesin is a non-melt-formable fluororesin produced by emulsion polymerization,
an amount of the first fluororesin with respect to a total mass of the first fluororesin and the second fluororesin is 40% by mass or more, and
a gloss of the molded body at an incident angle of 60° is 15% or more.

[2] The fluororesin molded body according to [1], wherein an amount of the first fluororesin with respect to a total mass of the first fluororesin and the second fluororesin is 50% by mass or more.

[3] The fluororesin molded body according to [1] or [2], wherein the first fluororesin and the second fluororesin are each independently a fluororesin containing 99% by mass or more of tetrafluoroethylene units relative to a total mass of the fluororesin. Advantageous Effects of Invention

The present invention can provide a fluororesin molded body using a fluororesin having a thermal history of having been heated to its melting point or higher, which has good compressive strength and compressive creep resistance.

DESCRIPTION OF EMBODIMENTS

Throughout the present specification and claims, the following terms have respective means as explained below.

The "unit based on a monomer" is a generic phrase for an atomic group directly formed by polymerizing one monomer molecule and an atomic group obtained by chemically converting a part of the atomic group. In the present specification, a unit based on a monomer is also simply referred to as a monomer unit.

The "monomer" refers to a compound having a polymerizable carbon-carbon double bond.

The "melting point" means a temperature corresponding to a maximum value of a melting peak measured by a differential scanning calorimetry (DSC) method.

Further, "to" indicating a numerical range means that the numerical values described before and after "to" are included as the lower limit and the upper limit of the range.

The "average particle diameter" means a 50% cumulative value (median diameter; D50) in a number-based particle diameter distribution, which is obtained using a laser diffraction/scattering type particle size distribution measuring device (for example, LA-920 measuring device manufactured by HORIBA, Ltd.).

The "melt-formable" means that melt flowability is exhibited.

The "melt flowability is exhibited" means that the existence of a temperature at which a melt flow rate is 0.1 to 1,000 g/10 minutes at a temperature that is higher than a melting point of a resin by 20°C or higher, under a condition of a load of 49 N.

The "melt flow rate" means a melt mass-flow rate (MFR) defined in JIS K 7210:1999 (ISO 1133:1997).

The "non-melt-formable" means that the melt flowability is not exhibited.

The "standard specific gravity (hereinafter, also referred to as "SSG")" is a value indicating an average molecular weight, and a higher SSG value indicates a smaller molecular weight. The "specific gravity" can be measured in accordance with ASTM D1457-91a, D4895-91a.

The "gloss" is a value that serves as an index of gloss, and is the specular gloss measured at an incident angle of 60° in accordance with JIS Z 8741.

<Non-melt-formable fluororesin>

The fluororesin molded body of the present invention is a molded body obtained by compression-molding and sintering a fluororesin composition containing fluororesin 1 (hereinafter also referred to as "fluororesin 1") and fluororesin 2 (hereinafter also referred to as "fluororesin 2").

Both the fluororesin 1 and the fluororesin 2 are non-melt-formable fluororesins.

The fluororesin 1 and the fluororesin 2 may be the same or different from each other.

The fluororesin 1 and the fluororesin 2 may each independently be used alone or in combination of two or more kinds of fluororesins. When using two or more kinds of fluororesins in combination, there is no particular limitation as long as the mixture of the two or more kinds of fluororesins is non-melt-formable.

As the fluororesin 1 and the fluororesin 2, a polymer having a tetrafluoroethylene unit (hereinafter, also referred to as "TFE unit") is preferable; and examples thereof include polytetrafluoroethylene (PTFE), a tetrafluoroethylene-ethylene copolymer, a tetrafluoroethylene-hexafluoropropylene copolymer, a tetrafluoroethylene-perfluoro(alkyl vinyl ether) copolymer, a tetrafluoroethylene-chlorotrifluoroethylene copolymer, a tetrafluoroethylene-ethylene-hexafluoropropylene copolymer, and a tetrafluoroethylene-hexafluoropropylene-vinylidene fluoride copolymer.

It is preferable that the fluororesin 1 and the fluororesin 2 are each independently PTFE. In the PTFE, an amount of the TFE unit with respect to the total mass of the fluororesin is preferably 99% by mass or more. The amount of the TFE unit with respect to the total mass of the PTFE is more preferably 99.5% by mass or more, and may be 100% by mass.

Examples of a monomer unit other than the TFE unit include the above-described ethylene unit, a hexafluoropropylene unit, a perfluoro(alkyl vinyl ether) unit, a chlorotrifluoroethylene unit, a vinylidene fluoride unit, and monomer units derived from perfluoro(2,2-dimethyl-1,3-dioxole), perfluoro(4-methoxy-1,3-dioxole), perfluoroalkylethylene, and the like. The number of the monomer units other than the TFE unit may be 1 or 2 or more. By containing the monomer unit other than the TFE unit, crystallization of the PTFE is suppressed to some extent, and thus the PTFE improves in terms of a tensile strength, a tensile elongation, dielectric breakdown resistance, creep resistance, and the like.

<Fluororesin 1>

The fluororesin 1 has a thermal history of having been heated to a melting point or higher one or more times. The fluororesin 1 can be obtained by crushing cutting chips produced while processing a primary molded body, which is manufactured by heating the fluororesin 1 to a melting point or higher, into a secondary molded body such as an industrial component having a desired shape, or obtained by crushing a secondary molded body that is no longer needed. The crushing can be performed by a crusher or the like. After the crushing, the fluororesin 1 may be further pulverized. The above-described heating may be, for example, heating by sintering required for manufacturing the molded body.

In a case where the fluororesin 1 is heated to a melting point or higher, a melting point of the fluororesin 1 is lowered as compared with a melting point of the fluororesin 1 before being heated to a melting point or higher.

The "fluororesin 1 has a thermal history of having been heated to a melting point or higher one or more times" can be confirmed by differential scanning calorimetry (DSC).

The melting point of the fluororesin 1 before being heated to a melting point or higher is preferably 360°C or lower, more preferably 355°C or lower, and still more preferably 350°C or lower. The lower limit value of the melting point is not particularly limited, but is preferably 100°C or higher and more preferably 150°C or higher. The melting point is preferably 100°C to 360°C, more preferably 100°C to 355°C, and still more preferably 150°C to 350°C.

In a case where the melting point is within the above-described range, a mechanical strength of the molded body to be obtained is likely to improve.

The melting point of the fluororesin 1 is preferably 335°C or lower, and more preferably 330°C or lower. The lower limit value of the melting point is not particularly limited, but is preferably 100°C or higher and more preferably 150°C or higher. The melting point is preferably 100°C to 335°C and more preferably 150°C to 330°C.

In a case where the melting point is within the above-described range, a mechanical strength of the molded body to be obtained is likely to improve.

A bulk density of the fluororesin 1 is preferably 100 g/L or more, more preferably 105 g/L or more, and still more preferably 110 g/L or more. In a case where the bulk density is equal to or higher than the above-described lower limit value, the amount of air entrapped during the manufacturing of the molded body is small, and thus degassing ability is excellent, and the fluororesin 1 is likely to be favorably fused between powder particles. Furthermore, the molded body to be obtained is less likely to have voids remaining, and thus uniformity of the molded body is also likely to improve.

An average particle diameter of the fluororesin 1 is preferably 1 to 500 $\mu$m, more preferably 5 to 300 $\mu$m, and still more preferably 5 to 100 $\mu$m.

In a case where the average particle diameter of the fluororesin 1 is within the above-described range, the uniformity of the molded body improves.

The fluororesin 1 may be a crushed product of a molded body that has been molded and processed by a method including a step of heating, to a melting point or higher, a molding material containing PTFE obtained by suspension polymerization.

The PTFE obtained by suspension polymerization has an extremely high melt viscosity and exhibits such non-melt-formability that does not allow molding to be performed by a general molding method for thermoplastic resins, such as extrusion molding and injection molding. Therefore, molding of the PTFE manufactured by suspension polymerization (hereinafter, also referred to as "molding powder") is implemented by a method in which the molding powder is filled into a mold, compression-molded, and then sintering.

Specifically, in the method of molding the molding powder, first, the mold is filled with the molding powder at normal temperature, the molding powder is compression-molded to obtain a preliminary molded body, and the preliminary molded body is heated to a melting point or higher of the PTFE to be sintered, thereby obtaining a primary molded body. The molding powder may be granulated and used as a granulated product as necessary. In the granulation, an inorganic filler or other optional components may be compounded.

Thereafter, the primary molded body is subjected to mechanical processing such as cutting processing, to be processed into a secondary molded body having a desired shape. Examples of the secondary molded body include industrial members such as a gasket, a lining, and an insulating film, and a square tank that receives a strong acid or a strong alkali in a semiconductor industry.

Cutting chips, scraps, or the like (hereinafter, also referred to as "cutting chips or the like"), which are produced when cutting the primary molded body to manufacture the secondary molded body, a powder obtained by crushing the cutting chips or the like, and a powder such as a powder obtained by crushing the secondary molded body that is no longer needed can be used as the fluororesin 1. In the present specification, the above-described cutting chips or the like, the above-described powders, and the like are also collectively referred to as "crushed products". The secondary molded body or the cutting chips or the like can be crushed by a crusher or the like. After the crushing, the crushed products may be further pulverized. A volume of one crushed product is, for example, 50 cm3$^{2}$ or less.

<Fluororesin 2>

Fluororesin 2 is a non-melt-formable fluororesin produced by emulsion polymerization, and has no thermal history of having been heated its melting point or higher.

The "fluororesin 2 has no thermal history of having been heated to a melting point or higher" can be confirmed by differential scanning calorimetry (DSC).

The emulsion polymerization method is a polymerization method in which a monomer is polymerized in an aqueous medium containing water to obtain a dispersion liquid (hereinafter, also referred to as "second dispersion liquid") containing particles of the fluororesin 2. In general, the emulsion polymerization is performed by stirring a reaction solution containing water, a polymerization initiator, and a surfactant, and polymerizing the monomer in the reaction solution.

The aqueous emulsion after emulsion polymerization may be used as the second dispersion, or an aqueous dispersion with its storage stability improved by adding a nonionic surfactant to the aqueous emulsion may be used as the second dispersion.

From the viewpoint of suppressing coloration of the molded body, an amount of a nonionic surfactant is preferably 2 parts by mass or less, more preferably 1 part by mass or less, and still more preferably 0.1 parts by mass or less with respect to 100 parts by mass of the fluororesin in the second dispersion liquid.

Examples of the nonionic surfactant will be described later.

The melting point of the fluororesin 2 is preferably 360°C or lower, more preferably 355°C or lower, and still more preferably 350°C or lower. The lower limit value of the melting point is not particularly limited, but is preferably 100°C or higher and more preferably 150°C or higher. The melting point is preferably 100°C to 360°C, more preferably 100°C to 350°C, and still more preferably 150°C to 350°C.

In a case where the melting point is within the above-described range, a mechanical strength of the molded body to be obtained is likely to improve.

An amount of the fluororesin 2 is preferably 5% to 40% by mass, more preferably 7% to 35% by mass, and still more preferably 10% to 30% by mass with respect to the total mass of the second dispersion liquid.

An average particle diameter of the fluororesin 2 in the second dispersion liquid is preferably 0.05 to 0.5 $\mu$m, more preferably 0.08 to 0.45 $\mu$m, and still more preferably 0.10 to 0.35 $\mu$m. In a case where the average particle diameter is within the above-described range, emulsion stability is excellent.

It is preferable that the fluororesin 2 contains PTFE obtained by the emulsion polymerization method.

In a method of producing PTFE by emulsion polymerization, a TFE monomer is homopolymerized alone in the above-described reaction solution, or a TFE monomer and a monomer other than the TFE monomer are copolymerized in the above-described reaction solution, thereby obtaining a second dispersion liquid in which PTFE particles are dispersed in a dispersion medium.

For example, the TFE monomer is subjected to emulsion polymerization under pressure of preferably 0.5 to 3.0 MPa for 1 to 20 hours in the presence of an aqueous medium, a polymerization initiator, an anionic fluorine-containing emulsifier, and a stabilizing auxiliary agent to obtain a dispersion liquid. Furthermore, the above-described nonionic surfactant may be compounded.

In addition, the dispersion liquid may be obtained without using a fluorine-based surfactant by the method described in PCT International Publication No. WO2021/085470, PCT International Publication No. WO2022/181662, and the like.

Examples of the anionic fluorine-containing emulsifier will be described later.

An amount of the anionic fluorine-containing emulsifier used in the emulsion polymerization step of the TFE monomer is preferably 0.15 to 2.0 parts by mass, more preferably 0.2 to 1.0 parts by mass, and still more preferably 0.2 to 0.5 parts by mass with respect to 100 parts by mass of the PTFE to be produced.

As the stabilizing auxiliary agent, paraffin wax, a fluorine-based oil, a fluorine-based solvent, a silicone oil, or the like is preferable, and paraffin wax is more preferable. The stabilizing auxiliary agent may be used alone or in combination of two or more kinds thereof.

The paraffin wax may be any of a liquid, a semisolid, or a solid at room temperature, and is preferably a saturated hydrocarbon having 12 or more carbon atoms. A melting point of the paraffin wax is preferably 40°C to 65°C and more preferably 50°C to 65°C. An amount of the stabilizing auxiliary agent used is preferably 0.1 to 12 parts by mass and more preferably 0.1 to 8 parts by mass with respect to 100 parts by mass of the aqueous medium to be used.

As the polymerization initiator, a water-soluble radical initiator, a water-soluble redox catalyst, or the like is preferably adopted. As the water-soluble radical initiator, a persulfate such as ammonium persulfate and potassium persulfate; or a water-soluble organic peroxide such as disuccinic acid peroxide, bisglutaric acid peroxide, and tert-butyl hydroperoxide is preferable. The polymerization initiator may be used alone or in combination of two or more kinds thereof. In addition, an oil-soluble initiator can also be used in the same manner. As the polymerization initiator, disuccinic acid peroxide is more preferable.

An amount of the polymerization initiator used is preferably 0.01 to 0.20 parts by mass and more preferably 0.01 to 0.15 parts by mass with respect to 100 parts by mass of the PTFE to be produced.

With regard to a standard specific gravity (SSG) of the PTFE resin in the second dispersion liquid, the PTFE can be conceptually classified into a high-molecular-weight PTFE when the SSG is 2.14 or more and less than 2.22 and a low-molecular-weight PTFE when the SSG is 2.22 to 2.4. In a case where the molecular weight is low, physical properties of the PTFE are reduced, so that the SSG is preferably 2.14 or more and less than 2.22, and more preferably 2.14 to 2.21.

[Anionic fluorine-containing emulsifier]

Examples of the anionic fluorine-containing emulsifier used in the emulsion polymerization include a fluorine-containing emulsifier represented by General Formula (1) (hereinafter, also referred to as "fluorine-containing emulsifier (1)").

General Formula (1): $XCF_2CF_2(O)_mCF_2CF_2OCF_2COOA$

(in the formula, X is a hydrogen atom or a fluorine atom, A is a hydrogen atom, an alkali metal, or NH4, and m is 0 or 1)

The fluorine-containing emulsifier (1) is preferable in that polymerization stabilizing action of the PTFE particles is favorable.

From the viewpoint of polymerization stability, X is preferably a fluorine atom.

From the viewpoint of polymerization stability and mechanical stability of the second dispersion liquid, m is preferably 1.

Specific examples of A include H, Li, Na, K, and $NH_4$. $NH_4$ is preferable in that the fluorine-containing emulsifier (1) shows good solubility in water and metal ion components are less likely to remain as impurities.

Particularly preferred examples of the fluorine-containing emulsifier (1) include $CF_3CF_2CF_2CF_2OCF_2COONH_4$ and $C_2F_5OCF_2CF_2OCF_2COONH_4$ (hereinafter, referred to as EEA), and EEA is more preferable.

The fluorine-containing emulsifier (1) can be manufactured as follows. An ester of a corresponding non-fluorine-containing carboxylic acid or a partially fluorinated carboxylic acid is fluorinated using a known fluorination method such as a liquid phase fluorination method in which it is reacted with fluorine in a liquid phase, a fluorination method using cobalt fluoride, or an electrochemical fluorination method. An ester bond of the obtained fluorinated ester is hydrolyzed, followed by purification of the hydrolyzed product. The purified product is then neutralized with ammonia.

[Nonionic surfactant]

Examples of the nonionic surfactant compounded in an aqueous emulsion liquid obtained by the emulsion polymerization include a nonionic surfactant represented by General Formula (2) (hereinafter, also referred to as "nonionic surfactant (2)") and a nonionic surfactant represented by General Formula (3) (hereinafter, also referred to as "nonionic surfactant (3)").

General Formula (2): $R^1$-O-D-H

(in the formula, $R^1$ is an alkyl group having 8 to 18 carbon atoms, O is an oxygen atom, and D is a polyoxyalkylene chain consisting of 5 to 20 oxyethylene groups and 1 or 2 oxypropylene groups)

General Formula (3): $R^2$-O-E-G

(in the formula, $R^2$ is an alkyl group having 6 to 18 carbon atoms, O is an oxygen atom, E is a polyoxyalkylene chain consisting of 1 to 3 oxybutylene groups and 5 to 20 oxyethylene groups, and G is a hydrogen atom or a methyl group) The nonionic surfactant may be used alone or in combination of two or more kinds thereof.

The nonionic surfactant in the second dispersion liquid is preferably one or more selected from the group consisting of the nonionic surfactant (2) and the nonionic surfactant (3), and two or more kinds thereof may be used in combination. The nonionic surfactant (2) and the nonionic surfactant (3) may be used in combination.

The nonionic surfactant is a mixture of a plurality of molecules having a certain chain length distribution or isomers, and a chain length of the polyoxyalkylene chain represents an average chain length of the plurality of molecules. The number of oxyethylene groups and oxypropylene groups in the polyoxyalkylene chain is an average value. In addition, in a case where a plurality of kinds of nonionic surfactants are mixed and used, similarly, an average value of the number of oxyalkylene groups in respective nonionic surfactants may be within the above-described range. In addition, each numerical value is not limited to an integer.

In the nonionic surfactant (2), the number of carbon atoms in the alkyl group represented by $R^1$ is preferably in a range of 8 to 18 and more preferably 10 to 16. In a case where the number of carbon atoms in $R^1$ is equal to or more than the lower limit value of the above-described range, the surface tension of the second dispersion liquid is likely to be low, and thus the wettability is likely to be high. In a case where the number of carbon atoms equal to or less than the upper limit value, storage stability of the second dispersion liquid is excellent.

In a case where the alkyl group has a branched structure such that the alkyl group as a hydrophobic group is branched in the middle, the wettability of the second dispersion liquid is more likely to increase. The alkyl group having a branched structure is preferably an alkyl group having a branch in a region from a carbon atom at the base of the alkyl group to a fifth carbon atom, and more preferably an alkyl group having a branch in a region from a carbon atom at the base of the alkyl group to a third carbon atom. In addition, the carbon atom having a branch may be a secondary carbon atom or a tertiary carbon atom, and is preferably a secondary carbon atom.

Examples of the alkyl group having a branched structure include $C_{10}H_{21}CH(CH_3)CH_2$-, $C_9H_{19}CH(C_3H_7)$-, and $C_6H_{13}CH(C_6H_{13})$-.

In the nonionic surfactant (2), D as a hydrophilic group is a polyoxyalkylene chain consisting of 5 to 20 oxyethylene groups and 1 or 2 oxypropylene groups. In particular, in a case where the polyoxyalkylene chain consists of 7 to 12 oxyethylene groups and 1 or 2 oxypropylene groups, characteristics of the second dispersion are suitable.

In a case where D includes an oxypropylene group, the defoaming ability is likely to improve. In a case where the number of oxypropylene groups is 2 or less, the surface tension is low, the wettability is likely to be high, and occurrence of coating repellency during overcoating is unlikely to occur, which is preferable.

In addition, in D, the oxypropylene group may be present between a polyoxyethylene group and a polyoxyethylene group, or may be bonded to a polyoxyethylene chain terminal. In a case where the oxypropylene group is bonded to the polyoxyethylene chain terminal, the defoaming ability is likely to improve. In particular, in a case where the oxypropylene group is bonded to a molecular terminal side of both terminals of the polyoxyethylene chain, the defoaming ability is more likely to improve.

In the nonionic surfactant (2), the average number of oxyethylene groups in one molecule is preferably 5 to 20 and more preferably in a range of 7 to 12. In a case where the average number of oxyethylene groups in one molecule is equal to or more than the lower limit value of the above-described range, favorable storage stability is likely to be obtained. In a case where the average number of oxyethylene groups is equal to or less than the upper limit value of the above-described range, favorable wettability is likely to be obtained.

As the nonionic surfactant (2), it is possible to use a commercially available nonionic surfactant having a normal molecular structure, such as $C_{13}H_{27}O(C_2H_4O)_8C_3H_6OH$, $C_{13}H_{27}O(C_2H_4O)_9C_3H_6OH$, $C_{13}H_{27}O(C_2H_4O)_{10}(C_3H_6O)_2H$, and $C_{16}H_{27}O(C_2H_4O)_{12}(C_3H_6O)_2H$.

An amount of the nonionic surfactant (2) is preferably 2 to 12 parts by mass and more preferably 4 to 12 parts by mass with respect to 100 parts by mass of the fluororesin in the second dispersion liquid. In a case where the amount is equal to or more than the lower limit value of the above-described range, favorable storage stability is likely to be obtained. In a case where the amount of the nonionic surfactant (2) is large, the nonionic surfactant (2) is suitable for an application in which a thick coating is adopted, but the performance does not improve even in a case where the amount exceeds the upper limit value of the above-described range; and for economic reasons, it is preferable that the amount does not exceed the upper limit of the above-described range.

In the nonionic surfactant (3), the number of carbon atoms in the alkyl group represented by $R^2$ is preferably in a range of 6 to 18, more preferably 8 to 16, and still more preferably 10 to 14. In a case where the number of carbon atoms in the above-described alkyl group is equal to or more than the lower limit value of the above-described range, the surface tension of the second dispersion liquid is likely to be low, and thus the wettability is likely to be high. In a case of being equal to or less than the upper limit value of the above-described range, storage stability of the second dispersion liquid is excellent. In a case where the number of carbon atoms in the alkyl group is within the range, the wettability is favorable, and the storage stability is also favorable.

In a case where the alkyl group represented by $R^2$ has a branched structure, the wettability of the dispersion liquid is more likely to increase. The carbon atom having a branch may be a secondary carbon atom or a tertiary carbon atom, and is preferably a secondary carbon atom. Examples of the alkyl group having a branched structure include $C_{10}H_{21}CH(CH_3)CH_2$-, $C_9H_{19}CH(C_3H_7)$-, $C_6H_{13}CH(C_6H_{13})$-, and $CH(CH_3)_2CH_2CH(CH_3)_2CH_2CH(CH(CH_3)_2CH_2$-.

In the alkyl group represented by $R^2$, 10% or less of hydrogen atoms in the alkyl group may be replaced with a halogen element such as a fluorine atom, a chlorine atom, and a bromine atom. In addition, the alkyl group may contain 1 or 2 unsaturated bonds.

E in General Formula (3) is a polyoxyalkylene chain consisting of 1 to 3 oxybutylene groups and 5 to 20 oxyethylene groups. The number of oxybutylene groups is preferably 1 to 2.5 and more preferably 1 to 2. In a case where the number of oxybutylene groups is equal to or more than the lower limit value of the above-described range, the defoaming ability, the wettability, and the viscosity characteristics are likely to be favorable. In a case where the number is equal to or less than the upper limit value, the viscosity of the second dispersion liquid is suppressed from increasing, and thus favorable stability is likely to be obtained. In a case where the number of oxybutylene groups is within the above-described range, the properties such as the viscosity, the stability, the defoaming ability, and the wettability are favorable, which is preferable.

The oxybutylene group may be branched or linear, and is preferably branched.

Examples of the oxybutylene group include $-CH_2-CH(C_2H_5)-O-$, $-CH(C_2H_5)CH_2-O-$, $-CH(CH_3)-CH(CH_3)-O-$, $-CH_2CH_2-CH(CH_3)-O-$, and $-CH_2CH_2CH_2CH_2-O-$.

Among these, $-CH_2-CH(C_2H_5)-O-$, $-CH(C_2H_5)CH_2-O-$, and $-CH_2CH_2-CH(CH_3)-O-$ are preferable.

Examples of a raw material of the oxybutylene group include various butylene oxides; and specific examples thereof include 1,2-butylene oxide, 2,3-butylene oxide, tetrahydrofuran, and methyl oxetane.

In the nonionic surfactant (3), the number of oxyethylene groups in the polyoxyalkylene chain is 5 to 20, preferably 6 to 15 and more preferably 7 to 13. In a case where the number of oxyethylene groups is equal to or more than the lower limit value of the above-described range, the storage stability of the dispersion liquid is likely to be favorable. In a case where the number is equal to or less than the upper limit value, the wettability is likely to be favorable. In a case where the number of oxybutylene groups is within the above-described range, the properties such as the viscosity, the stability, the defoaming ability, and the wettability are favorable, which is preferable.

The oxybutylene group in the polyoxyalkylene chain may have a block structure or a random structure.

The oxybutylene group may be present at any portion of the polyoxyalkylene chain, and is preferably present in a region of 70% of the total length of the polyoxyalkylene chain from the $R^2$-O- group side, and more preferably present in a region of 50% of the total length of the polyoxyalkylene chain from the $R^2$-O- group side.

The portion of the polyoxyalkylene chain bonded to the $R^2$-O- group is preferably an oxybutylene group and more preferably a polyoxybutylene chain consisting of 1 or 2 oxybutylene groups. In addition, the portion of the polyoxyalkylene chain bonded to the G group is preferably an oxyethylene group and more preferably a polyoxyethylene chain consisting of 5 to 20 oxyethylene groups.

The polyoxyalkylene chain having the above-described preferred structure has more favorable properties in terms of viscosity, stability, defoaming properties, wettability, etc., which is preferable.

G in General Formula (3) is a hydrogen atom or a methyl group, and is preferably a hydrogen atom.

The nonionic surfactant (3) can be obtained by adding butylene oxide and ethylene oxide to a higher alcohol by a known method. The butylene oxide and the ethylene oxide may be mixed and reacted at the same time, the butylene oxide may be reacted first and then the ethylene oxide may be reacted, or the ethylene oxide may be reacted first and then the butylene oxide may be reacted. A preferable method is the method in which the butylene oxide is first reacted and then the ethylene oxide is reacted.

Examples of the nonionic surfactant (3) include $C_{13}H_{27}OCH_2CH(C_2H_5)O(C_2H_4O)_8H$, $C_{10}H_{21}CH(CH_3)CH_2OCH_2CH(C_2H_5)O(C_2H_4O)_8H$, $C_{10}H_{21}CH(CH_3)CH_2OCH_2CH(C_2H_5)CH_2O(C_2H_4O)_8H$, $C_{12}H_{25}OCH_2CH(C_2H_5)O(C_2H_4O)_8H$, $C_8H_{17}OCH_2CH(C_2H_5)O(C_2H_4O)_{10}H$, $C_{12}H_{25}OCH_2CH(C_2H_5)O(C_2H_4O)_{10}H$, $C_{13}H_{27}OCH_2CH(C_2H_5)O(C_2H_4O)_{11}H$, $C_{13}H_{27}OCH_2CH_2OCH_2CH(C_2H_5)O(C_2H_4O)_8H$, $C_{12}H_{25}O(CH_2CH(C_2H_5)O)_2(C_2H_4O)_8H$, $C_{10}H_{21}CH(CH_3)CH_2O(C_2H_4O)_9CH_2CH(C_2H_5)OH$, $C_{16}H_{33}OC_2H_4OCH(C_2H_5)CH_2O(C_2H_4O)_9H$, $C_{12}H_{25}OCH_2CH(C_2H_5)O(C_2H_4O)_8CH_2CH(C_2H_5)OH$, $C_{13}H_{27}OCH(CH_3)CH(CH_3)O(C_2H_4O)_8H$, $C_{10}H_{21}CH(CH_3)CH_2OCH(CH_3)CH(CH_3)O(C_2H_4O)_8H$, $C_{10}H_{21}CH(CH_3)CH_2OCH(CH_3)CH(CH_3)O(C_2H_4O)_8H$, $C_{12}H_{25}OCH(CH_3)CH(CH_3)O(C_2H_4O)_8H$, $C_8H_{17}OCH(CH_3)CH(CH_3)O(C_2H_4O)_{10}H$, $C_{12}H_{25}OCH(CH_3)CH(CH_3)O(C_2H_4O)_{10}H$, $C_{13}H_{27}OCH(CH_3)CH(CH_3)O(C_2H_4O)_{11}H$, $C_{13}H_{27}O(CH_2)_4O(C_2H_4O)_8H$, $C_{12}H_{25}O(CH_2)_4O(C_2H_4O)_8H$, $C_8H_{17}O(CH_2)_4O(C_2H_4O)_{10}H$, $C_{12}H_{25}O(CH_2)_4O(C_2H_4O)_{10}H$, $C_{13}H_{27}O(CH_2)_4O(C_2H_4O)_{11}H$, $C_{13}H_{27}O(CH_2)_2CH(CH_3)O(C_2H_4O)_8H$, $C_{12}H_{25}O(CH_2)_2CH(CH_3)O(C_2H_4O)_8H$, $C_8H_{17}O(CH_2)_2CH(CH_3)O(C_2H_4O)_{10}H$, $C_{12}H_{25}O(CH_2)_2CH(CH_3)O(C_2H_4O)_{10}H$, and $C_{13}H_{27}O(CH_2)_2CH(CH_3)O(C_2H_4O)_{11}H$.

In a case where the second dispersion liquid contains the nonionic surfactant (3), an amount of the nonionic surfactant (3) is preferably 0.1 to 12 parts by mass and more preferably 0.5 to 11 parts by mass, and still more preferably 1 to 10 parts by mass with respect to 100 parts by mass of the fluororesin in the second dispersion liquid. In a case where the amount is equal to or more than the lower limit value of the above-described range, favorable storage stability is likely to be obtained. In addition, cracks are less likely to occur in a coating film of the fluororesin, and coating repellency is less likely to occur. In a case where the amount of the nonionic surfactant (3) is large, the nonionic surfactant (3) is suitable for an application in which a thick coating is adopted, but the performance does not improve even in a case where the amount exceeds the upper limit value of the above-described range; and for economic reasons, it is preferable that the amount does not exceed the upper limit of the above-described range.

In a case where the nonionic surfactant (2) and the nonionic surfactant (3) are used in combination as the nonionic surfactant, the number of oxybutylene groups per one nonionic surfactant molecule as an average value of the entire nonionic surfactant is preferably 0.5 to 2, more preferably 0.7 to 1.7, and still more preferably 0.9 to 1.

The nonionic surfactant (2) and the nonionic surfactant (3) may be added separately. A mixture containing the nonionic surfactant (3) and the nonionic surfactant (2) that is produced as a by-product in a case of preparing the nonionic surfactant (3) may be used.

The second dispersion liquid contains water as a dispersion medium of the fluororesin particles. The water may be water contained in the aqueous emulsion liquid obtained by the emulsion polymerization, or may be water prepared separately from water in the aqueous emulsion liquid.

The second dispersion liquid may contain one or more of a pH adjuster (for example, ammonia or the like), an anionic surfactant, a polyethylene oxide-based thickener, a polyurethane-based thickener, a thixotropic agent, a silicone-based wettability improver, a fluorine-based wettability improver, a preservative, and the like as necessary.

Furthermore, one or more of water-soluble organic solvents, organic solvents (e.g., toluene, xylene, etc.), pigments (e.g., titanium oxide, iron oxide, carbon black, cobalt blue, etc.), glass powder, hollow glass beads, and colorants (e.g., graphite particles, silica particles, mica or titanium oxide-coated mica powder, etc.) may be blended.

<Fluororesin composition>

The fluororesin composition contains the fluororesin 1 and the fluororesin 2.

The fluororesin composition may contain one or more of other solid components, in addition to the fluororesin 1 and the fluororesin 2.

Examples of the other solid components include solid components used in a production process of the fluororesin 1, solid components used in a production process of the fluororesin 2, and solid components added after the production of the fluororesin 1 and the fluororesin 2.

Specific examples include inorganic fillers, pigments (e.g., titanium oxide, iron oxide, carbon black, cobalt blue, etc.), colorants (e.g., graphite particles, silica particles, mica or titanium oxide-coated mica powder, etc.), and the above-described additives.

Examples of the inorganic filler include reinforcing fibers (glass fibers, carbon fibers, and the like), glass powder, bronze powder, graphite powder, and hollow glass beads.

An amount of the other solid components is preferably 70% by mass or less, more preferably 60% by mass or less, and still more preferably 50% by mass or less with respect to the total mass of solid contents of the fluororesin composition. This amount may be zero.

A powder of the fluororesin composition is used for compression molding. With respect to the method for producing a powder of the fluororesin composition, the following modes (1) to (4) can be mentioned as examples, and the mode (4) is preferable.

(1) A powder of fluororesin 1 and a powder of fluororesin 2 are mixed in a dry manner.
(2) A powder of fluororesin 1 and a dispersion of fluororesin 2 are mixed, and the solid in the resulting mixture is powdered.
(3) A dispersion of fluororesin 1 and a powder of fluororesin 2 are mixed, and the solid in the resulting mixture is powdered.
(4) A dispersion of fluororesin 1 and a dispersion of fluororesin 2 are mixed, and the solid in the resulting mixture is powdered.

As the dispersion liquid (hereinafter, also referred to as "first dispersion liquid") in which the fluororesin 1 is dispersed, a dispersion liquid obtained by mixing a powder of fluororesin 1 produced by the above-described production method with a water-soluble organic solvent is preferable. As the water-soluble organic solvent, from the viewpoint of miscibility of the fluororesin 1 and water, one or more water-soluble organic solvents selected from the group consisting of a non-protonic water-soluble organic solvent and alcohols are preferable. The alcohols may have an amino group or an alkoxy group as a substituent.

As the non-protonic water-soluble organic solvent, acetone, tetrahydrofuran, or acetonitrile is preferable. As the alcohols, methanol, ethanol, propanol, isopropyl alcohol, or 1-methoxy-2-propanol is preferable. Among the above, as the water-soluble organic solvent, isopropyl alcohol is more preferable. The water-soluble organic solvent may be used alone or in combination of two or more kinds thereof.

An amount of the fluororesin 1 is preferably 3% to 70% by mass, more preferably 5% to 65% by mass, and still more preferably 10% to 60% by mass with respect to the total mass of the first dispersion liquid.

The dispersion liquid in which the fluororesin 2 is dispersed is preferably the second dispersion liquid. In a case where the powder of fluororesin 2 is used, it is possible to use a powder of fluororesin 2 which is obtained by separating the fluororesin 2 from the solvent in the second dispersion liquid by filtration, drying, or the like.

In the cases of modes (2) to (4) above, the mixture is stirred to aggregate the fluororesin 1 and the fluororesin 2, and then filtered to separate the aggregates from the dispersion medium, followed by drying, to obtain a powder of the fluororesin composition.

The aggregates obtained by solid-liquid separation may be washed before drying. Water or an aqueous solution is preferable as the washing solvent. When the aggregates contain a water-soluble organic solvent, it is preferable to adjust the pH of the washing solvent to a level that allows the water-soluble organic solvent to be removed.

The aggregates may be dried by vacuum drying or atmospheric drying. Preferably, drying is performed at a temperature below the melting point of the fluororesin for at least 6 hours.

The gloss of the molded body can be adjusted by changing the conditions of the aggregation step in which the mixture is stirred to obtain the aggregate.

For example, increasing the temperature of the mixture in the aggregation step tends to decrease the gloss. Further, increasing the stirring intensity in the aggregation step tends to increase the gloss. The stirring intensity can be adjusted by the rotation speed of the stirring blades, the shape of the stirring blades, and the number and shape of the baffles.

These adjustment methods may also be combined.

In a case of the above-described modes (2) to (4), the total amount of the fluororesin 1 and the fluororesin 2 is preferably 10% to 50% by mass, more preferably 12% to 45% by mass, and still more preferably 15% to 35% by mass with respect to the total mass of the mixture. In a case where the total amount of the fluororesin 1 and the fluororesin 2 is equal to or more than the lower limit value of the above-described range, the fluororesin 1 and the fluororesin 2 are likely to aggregate, and thus solid-liquid separation easily occurs. In a case where the total amount of the fluororesin 1 and the fluororesin 2 is equal to or less than the upper limit value of the above-described range, the mixing of the fluororesin 1 and the fluororesin 2 is likely to be promoted.

In a case of the above-described mode (4), an amount of the water-soluble organic solvent is preferably 1 to 150 parts by mass, more preferably 3 to 140 parts by mass, and still more preferably 5 to 130 parts by mass with respect to 100 parts by mass of water in the mixture.

An amount of the fluororesin 1 is preferably 40% by mass or more, more preferably 45% by mass or more, still more preferably 50% by mass or more, even more preferably 52% by mass or more, and particularly preferably 55% by mass or more, with respect to the total mass of the fluororesin 1 and the fluororesin 2. When the amount of the fluororesin 1 is equal to or greater than the lower limit of the above range, it is easy to adjust the gloss of the molded product to 15% or greater. The upper limit is not particularly limited, and may be, for example, less than 100% by mass.

<Molded body>

The molded body according to the present invention is obtained by compression-molding the fluororesin composition described above, and then sintering the compression-molded product. Specifically, the powder of fluororesin composition is placed in a mold and compression-molded by pressurization to obtain a preliminary molded body, and the obtained preliminary molded body is sintered to obtain a primary molded body. A shape of the primary molded body is not particularly limited. For example, the primary molded body may have a block shape such as a cylindrical shape and a polygonal columnar shape.

In a case of compression-molding the above-described fluororesin composition, it is preferable to pressurize the fluororesin composition at a pressure of 100 to 350 kg/cm$^2$.

The sintering temperature after the above-described preliminary molding is preferably 360°C to 380°C.

The obtained primary molded body may be processed into a secondary molded body having a desired shape by cutting processing or the like. Examples of use of the secondary molded body include a seal, a packing, a roller, a socket, and a joint.

The molded body according to the present invention may be the above-described primary molded body or the above-described secondary molded body.

The gloss of the fluororesin molded body of the present invention is 15% or higher, preferably 18% or higher, and more preferably 20% or higher.

A gloss level at or above the above-mentioned lower limit provides good compressive strength and compressive creep resistance. The upper limit of gloss is not particularly limited.

The reason that a molded body with a gloss level at or above the above-mentioned lower limit provides good compressive strength and compressive creep resistance is assumed to be that the gloss level depends on the dispersibility of mixture of the fluororesin 1 and the fluororesin 2.

The compressive strength of the fluororesin molded body of the present invention is preferably 3 MPa or more (1% deformation) and 12 MPa or more (10% deformation).

More preferably, the compressive strength (1% deformation) is 3.3 MPa or more and the compressive strength (10% deformation) is 13 MPa or more. Even more preferably, the compressive strength (1% deformation) is 3.5 MPa or more and the compressive strength (10% deformation) is 14 MPa or more.

The upper limit of the compressive strength is not particularly limited.

The compressive strength referred to in the present specification is the value obtained using the measurement method described in the Examples.

The compressive creep of the fluororesin molded body of the present invention is preferably 15% or less (deformation) and 12% or less (permanent deformation).

More preferably, the compression creep (deformation) is 13% or less and the compression creep (permanent deformation) is 11% or less, and even more preferably, the compression creep (deformation) is 10% or less and the compression creep (permanent deformation) is 10% or less.

There is no particular lower limit for the compression creep.

The compression creep values referred to in the present specification are values obtained using the measurement method described in the Examples.

[Examples]

Hereinbelow, the present invention will be described with reference to Examples which, however, should not be construed as limiting the present invention.

<Measuring method>

[Melting point]

A melting point was determined from an endothermic peak in a case where the fluororesin had been heated to 380°C at 10 °C/min in an air atmosphere using a differential scanning calorimeter (DSC 8500, manufactured by PerkinElmer, Inc.). In a case where there were a plurality of endothermic peaks, a peak temperature of the largest endothermic peak was used.

[Average Particle Diameter]

An average particle diameter was calculated by dispersing the powder of fluororesin in water and measuring a number-based particle size distribution using a laser diffraction/scattering type particle size distribution measuring device (LA-920 measuring device manufactured by HORIBA, Ltd.). [Standard specific gravity (SSG)]

The measurement was performed in accordance with ASTM D1457-91a, D4895-91a.

[Gloss]

345 g of the fluororesin composition was placed in a mold having a diameter of 7.3 mm, and pressurized at 320 kg/cm$^2$ to obtain a preliminary molded body. The preliminary molded body was sintered at 380°C for 2 hours to obtain a fluororesin molded body.

The gloss was evaluated using a 0.5 mm-thick sheet molded body obtained by skiving the resulting fluororesin molded body.

The specular gloss was measured at an incident angle of 60° using PG-IIM manufactured by Nippon Denshoku Industries Co., Ltd. in accordance with JIS Z 8741.

[Compression Strength]

Test specimens were prepared as follows.
6.5 g of the fluororesin composition was placed in a mold with an inner diameter of 12.95 mm and pressed at 320 kg/cm$^2$ to obtain a preliminary molded body. This preliminary molded body was sintered at 380°C for 2 hours and processed into test specimens with a diameter of 12.7 mm and a height of 25.4 mm.

The compressive strength was measured using a Tensilon universal testing machine (RTF-1350 manufactured by Orientec Corporation) in accordance with ASTM D695.

The compressive strength (1% deformation) indicates the compressive stress at a strain of 1%. The larger this value, the greater the compression strength.

The compressive strength (10% deformation) indicates the compressive stress at a strain of 10%. The larger this value, the greater the compression strength.

[Compression Creep]

Test specimens were prepared as follows.
6.5 g of the fluororesin composition was placed in a mold with an inner diameter of 12.95 mm and pressed at 320 kg/cm$^2$ to obtain a preliminary molded body. This preliminary molded body was sintered at 380°C for 2 hours and processed into test specimens with a diameter of 12.7 mm and a height of 12.7 mm.

Compression creep was measured in accordance with ASTM D621 using a creep tester (145-SV-3 manufactured by Yasuda Seiki Seisakusho). Specifically, a load of 13.7 MPa was applied to the test specimen at 24°C, and the strain after 10 seconds was regarded as the initial deformation. The strain was measured again after 24 hours, and the compression creep (deformation) was calculated by the following formula. A smaller value indicates better compression creep.

Compression creep (deformation) = (height change after 24 hours [mm] - initial deformation [mm])/specimen height before measurement [mm] x 100

Compression creep (permanent deformation) was measured using the following formula, based on the specimen dimensions 24 hours after the end of the test. A smaller value indicates better compression creep.

Compression creep (permanent deformation) = specimen height 24 hours after the end of loading [mm]/specimen height before measurement [mm] x 100

Example 1 is an example according to the present invention, while Examples 2 and 3 are comparative examples.

<Example 1>

A powder of fluororesin 1 was produced by the following method.

A powder of unsintered PTFE homopolymer (molding powder, melting point before heating: 343°C) obtained by suspension polymerization was subjected to preliminary molding and the resulting was sintered to obtain a molded body. The resulting molded body was pulverized to obtain PTFE with an average particle size of 40 μm or less. The melting point of the resulting PTFE was 329°C, and the bulk density was 394 g/L.

In the obtained PTFE, there was no temperature at which a melt flow rate was 0.1 to 1,000 g/10 minutes at a temperature that was higher than the melting point of the resin by 20°C or higher, under a load of 49 N, and the PTFE was non-melt-formable.

A dispersion of fluororesin 2 (second dispersion) was prepared by the following method.

EEA was used as the anionic fluorine-containing emulsifier (1). 36 g of EEA, 555 g of paraffin wax (melting point: 55°C), and 61.3 liters of deionized water were charged into a 100 L stainless steel autoclave equipped with a baffle and a stirrer. After nitrogen substitution in the autoclave, the inside of the autoclave was depressurized, TFE monomer was introduced thereto, and the temperature was raised to 62°C while stirring. Furthermore, the TFE monomer was fed under pressure until the internal pressure reached 1.765 MPa, and 26.3 g of disuccinic acid peroxide (concentration: 80% by mass; the balance was water) was dissolved in 1 liter of hot water at approximately 70°C, and injected thereto.

Since the internal pressure of the autoclave dropped to 1.716 MPa after approximately 3 minutes, the TFE monomer was fed under pressure to maintain the internal pressure at 1.765 MPa, and the polymerization was carried out. During the polymerization, a total of 53 g of EEA was injected thereto by two separate injections of EEA dissolved in hot water. The autoclave temperature was gradually raised to 72°C, the reaction was terminated when the amount of the TFE monomer charged under pressure was 22 kg, and the TFE in the autoclave was released to the atmosphere. The polymerization time was 105 minutes. After cooling, the solidified paraffin wax on the upper part was removed to obtain a second dispersion liquid.

The amount of PTFE relative to the total mass of the second dispersion was approximately 25.0% by mass, and the amount of EEA relative to 100 mass parts by mass of PTFE was 0.40 parts by mass. An average particle diameter of the PTFE particles in the second dispersion liquid is preferably 0.26 μm. A standard specific gravity (SSG) of the PTFE C was 2.21. A melting point of the obtained PTFE was 337°C.

In the obtained PTFE, there was no temperature at which a melt flow rate was 0.1 to 1,000 g/10 minutes at a temperature that was higher than the melting point of the resin by 20°C or higher, under a load of 49 N, and the PTFE was non-melt-formable.

A powder of the fluororesin composition was prepared by the following method. A first dispersion liquid was prepared by mixing 200 g of the powder of fluororesin 1 (PTFE) obtained above with 200 g of isopropanol (IPA).

798 g of the second dispersion liquid obtained above and 802 g of water were placed in an 8-L stainless steel vessel equipped with a baffle and a stirrer. The mixture was stirred at 25°C and atmospheric pressure, and then the first dispersion liquid was added to obtain a mixture.

The amount of the fluororesin 1 relative to the total mass of the first dispersion liquid was 50.0% by mass.

The mass ratio of PTFE in the second dispersion liquid to the powder of fluororesin 1 (PTFE) was 1:1.

The mass ratio of IPA in the first dispersion liquid to water in the second dispersion liquid was 12:88. The total amount of the fluororesin (PTFE) relative to the total mass of the mixture was 20.0% by mass.

Next, an aggregation process was carried out. Specifically, the mixture was stirred at 680 rpm for 10 minutes at 25°C and atmospheric pressure using a stirrer to aggregate the solids. The mixture was then filtered through a sieve to separate the aggregates from the solvent. The aggregates were washed with a large amount of water, placed in a tray, and vacuum-dried at 25°C for at least 8 hours, followed by drying at 200°C for at least 10 hours, yielding a powder of fluororesin composition.

The amount of the fluororesin 1 relative to the total mass of the fluororesin 1 and the fluororesin 2 contained in the resulting fluororesin composition was 50% by mass.

The resulting fluororesin composition was placed in a mold of a predetermined shape and pressurized at 320 kg/cm$^2$ to obtain a preliminary molded body. This preliminary molded body was then sintered at 380°C for 2 hours to obtain a fluororesin molded body (primary molded body) of Example 1.

The gloss, compressive strength, and compressive creep of the fluororesin molded body were evaluated by the methods described above. The results are shown in Table 1 (the same applies below).

<Reference Example 1>

Instead of the fluororesin composition used in Example 1, the molding powder (powder consisting of unsintered PTFE homopolymer obtained by suspension polymerization) was used. Otherwise, a fluororesin molded body (primary molded body) was produced and evaluated in the same manner as in Example 1.

<Example 2>

A powder of the fluororesin 1 was used instead of the fluororesin composition used in Example 1. Otherwise, following the same procedure as in Example 1, it was attempted to produce a fluororesin molded body, but the adhesion between the fluororesin particles was insufficient, and a molded body could not be obtained. Therefore, the evaluations of gloss, compressive strength, and compressive creep were not performed.

<Example 3>

A powder of the fluororesin 2 was used instead of the fluororesin composition used in Example 1.

Specifically, when producing a powder of fluororesin composition, the fluororesin 2 in the second dispersion liquid was aggregated without using the first dispersion liquid and filtered, and the resulting aggregates were vacuum-dried at 25°C for at least 8 hours and then dried at 200°C for at least 10 hours to obtain a powder of the fluororesin 2.

Otherwise, a fluororesin molded body was produced in the same manner as in Example 1. When the resulting fluororesin molded body was compressed in a compression test, numerous voids occurred.

[Table 1]

| | | | Ref. Ex. 1 | Ex. 1 | Ex. 2 | Ex. 3 |
|---|---|---|---|---|---|---|
| Fluororesin composition | First fluororesin | [Parts by mass] | 0 | 50 | 100 | 0 |
| | Second fluororesin | [Parts by mass] | 0 | 50 | 0 | 100 |
| Suspension-polymerized PTFE (reference) | | [Parts by mass] | 100 | 0 | 0 | 0 |
| Fluororesin molded body | Compression strength | 1% deformation [MPa] | 4.2 | 5.0 | Unmeasurable due to unsuccessful molding | Numerous voids |
| | | 10% deformation [MPa] | 16 | 18 | | |
| | Compressive creep resistance | Deformation [%] | 9.3 | 7.6 | | |
| | | Permanent deformation [%] | 6.0 | 6.9 | | |
| | Gloss | 60° [%] | 32.7 | 22.2 | | |

As shown in Table 1, the fluororesin molded body of Example 1 had a gloss of at least 15%. Despite containing the fluororesin 1, which was prepared by pulverizing the sintered suspension-polymerized PTFE, it exhibited compressive strength and compressive creep resistance comparable to those of the fluororesin molded body of Reference Example 1, which was prepared from unsintered suspension-polymerized PTFE.

## Claims

1. A molded body obtained by compression-molding and sintering a fluororesin composition comprising:

   a first fluororesin having a thermal history of having been heated to a melting point or higher; and
   a second fluororesin having no thermal history of having been heated to a melting point or higher,
   wherein the first fluororesin is a non-melt-formable fluororesin,
   the second fluororesin is a non-melt-formable fluororesin produced by emulsion polymerization,
   an amount of the first fluororesin with respect to a total mass of the first fluororesin and the second fluororesin is 40% by mass or more, and
   a gloss of the molded body at an incident angle of 60° is 15% or more.

2. The fluororesin molded body according to claim 1, wherein the first fluororesin and the second fluororesin are each independently a fluororesin containing 99% by mass or more of tetrafluoroethylene units relative to a total mass of the fluororesin.

## INTERNATIONAL SEARCH REPORT

| International application No. |
| --- |
| **PCT/JP2024/019919** |

**A. CLASSIFICATION OF SUBJECT MATTER**

*C08J 5/00*(2006.01)i; *C08L 27/18*(2006.01)i
FI:   C08J5/00 CEW; C08L27/18

According to International Patent Classification (IPC) or to both national classification and IPC

**B. FIELDS SEARCHED**

Minimum documentation searched (classification system followed by classification symbols)

C08J5/00; C08L27/18; B29C43/00; B29K27/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/211092 A1 (DAIKIN INDUSTRIES, LTD.) 06 October 2022 (2022-10-06) whole document, in particular, claims, examples | 1-2 |
| X | WO 2022/211094 A1 (DAIKIN INDUSTRIES, LTD.) 06 October 2022 (2022-10-06) whole document, in particular, claims, examples | 1-2 |
| A | WO 2022/211093 A1 (DAIKIN INDUSTRIES, LTD.) 06 October 2022 (2022-10-06) whole document | 1-2 |
| A | JP 2011-171104 A (YAMAKATSU LABO KK) 01 September 2011 (2011-09-01) whole document | 1-2 |
| A | JP 2022-159202 A (DAIKIN INDUSTRIES, LTD.) 17 October 2022 (2022-10-17) whole document | 1-2 |
| A | WO 2019/244433 A1 (BLANC BIJOU CO., LTD.) 26 December 2019 (2019-12-26) whole document | 1-2 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 August 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/019919**

| Patent document cited in search report | | | Publication date (day/month/year) | Patent family member(s) | | | Publication date (day/month/year) |
|---|---|---|---|---|---|---|---|
| WO | 2022/211092 | A1 | 06 October 2022 | US | 2024/0026142 | A1 | |
| | | | | whole document, in particular, claims, examples | | | |
| | | | | EP | 4317220 | A1 | |
| | | | | CN | 117043262 | A | |
| | | | | KR | 10-2023-0145445 | A | |
| | | | | TW | 202305052 | A | |
| WO | 2022/211094 | A1 | 06 October 2022 | US | 2024/0026141 | A1 | |
| | | | | whole document, in particular, claims, examples | | | |
| | | | | EP | 4317221 | A1 | |
| | | | | CN | 117043264 | A | |
| | | | | KR | 10-2023-0146631 | A | |
| | | | | TW | 202305054 | A | |
| WO | 2022/211093 | A1 | 06 October 2022 | US | 2024/0026043 | A1 | |
| | | | | whole document | | | |
| | | | | EP | 4317308 | A1 | |
| | | | | CN | 117136213 | A | |
| | | | | KR | 10-2023-0160917 | A | |
| | | | | TW | 202305053 | A | |
| JP | 2011-171104 | A | 01 September 2011 | (Family: none) | | | |
| JP | 2022-159202 | A | 17 October 2022 | US | 2024/0018349 | A1 | |
| | | | | whole document | | | |
| | | | | WO | 2022/211072 | A1 | |
| | | | | EP | 4317219 | A1 | |
| | | | | TW | 202302750 | A | |
| | | | | CN | 117043263 | A | |
| | | | | KR | 10-2023-0146633 | A | |
| WO | 2019/244433 | A1 | 26 December 2019 | US | 2021/0362378 | A1 | |
| | | | | whole document | | | |
| | | | | JP | 6612001 | B1 | |
| | | | | CN | 112543700 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023091849 A
- JP 6612001 B
- WO 2021085470 A
- WO 2022181662 A